## Europäisches Patentamt

## European Patent Office

## Office européen des brevets

(19)

(11) Veröffentlichungsnummer: **0 135 745**
**B1**

(12) # EUROPÄISCHE PATENTSCHRIFT

(45) Veröffentlichungstag der Patentschrift:
08.03.89

(21) Anmeldenummer: 84109281.0

(22) Anmeldetag: 04.08.84

(51) Int. Cl.⁴: **G 01 N 21/64,** G 01 N 33/52

(54) **Festmembran für einen Indikatorraum.**

(30) Priorität: 12.08.83 DE 3329461

(43) Veröffentlichungstag der Anmeldung:
03.04.85 Patentblatt 85/14

(45) Bekanntmachung des Hinweises auf die Patenterteilung:
08.03.89 Patentblatt 89/10

(84) Benannte Vertragsstaaten:
AT CH DE FR GB IT LI LU NL SE

(56) Entgegenhaltungen:
EP-A-0 095 074
EP-A-0 105 870
EP-A-0 109 958
CH-A-425 276
DE-A-2 856 252

(73) Patentinhaber: **Max- Planck- Gesellschaft zur Förderung der Wissenschaften e.V.,**
**Bunsenstrasse 10, D-3400 Göttingen (DE)**

(72) Erfinder: **Opitz, Norbert, Dr. Dipl.- Phys.,**
**Villigsterstrasse 6, D-5840 Schwerte (DE)**
Erfinder: **Lübbers, Dietrich Werner, Prof. Dr.,**
**Rheinlanddamm 201 a, D-4600 Dortmund 1 (DE)**

(74) Vertreter: **Hofmann, Hans Walter, Dr.,**
**Hauptstrasse 38, D-6549 Tiefenbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Festmembran zur Begrenzung eines Indikatorraums, der einen optisch vermessbaren, durch die Konzentration einer Substanz oder durch die Änderung eines physikalischen oder chemischen Parameters in seinen Fluoreszenzeigenschaften veränderbaren Fluoreszenzindikator aufweist.

Die Indikatorräume der bezeichneten Gattung, häufig OPTODEN genannt, stellen den wesentlichen Teil von Messeinrichtungen dar, die optisch die Konzentration oder den physikalischen oder chemischen Parameter bestimmen. Solche Messeinrichtungen, wie sie beispielsweise aus der DE-A-2 508 637 bekannt sind, bestrahlen das Messobjekt mit monochromatischem Prüflicht, messen mit einer Lichtmesseinrichtung das vom Indikator ausgehende Licht, das Messlicht, und zeigen danach die Veränderung der Parameter oder die Konzentration der Substanz an, die diese Änderung ausgelöst hat.

Die Festmembran bildet dabei den Indikatorraum, der Indikator ist in die Membran einpolymerisiert oder eingesiegelt.

Die verwendeten Optoden sollen derart ausgebildet sein, dass eine möglichst genaue Messung vorgenommen werden kann.

Die Messempfindlichkeit von Optoden, deren Indikatoren Fluoreszenzlicht aussenden und die auf Teilchenkonzentrationen reagieren, wirft dabei besondere Probleme auf.

Nach STERN-VOLLMER hängt die Fluoreszenzlöschung von Fluoreszenzindikatoren durch Einwirkung der zu messenden Teilchen auf den Indikator hyperbolisch von der Teilchenkonzentration ab. Es ist beispielsweise für Sauerstoffmoleküle

$$(1) \qquad I = \frac{Io}{1 + Kp(O_2)}$$

mit

K = Quenchkonstante

$p(O_2)$ = Sauerstoffpartialdruck

Io = Fluoreszenzintensität ohne Teilchen

Durch Ableitung der Funktion nach P erhält man die eine Messempfindlichkeit beschreibende Funktion S(P) mit

$$(2) \qquad S(p) = dI/dp = K \cdot Io/(1 + Kp)^2$$

Für unterschiedliche Konstanten K ergeben sich Hyperbelscharen S(P), die sich im Bereich grosser Teilchenkonzentrationen schneiden. Ein Beispiel dafür sind etwa die Funktionen S(P), die aus den beiden K-Werten

K1 = 3.8 x 10exp-2 (Pyrenbuttersäure in Siliconmembran)

K2 = 2.4 x 10exp-3 (Pyrenbuttersäure in Dioctylphtalat)

gebildet werden können.

Für diese K-Werte Schneiden sich die Funktionen (2) in einem Schnittpunkt S(M) bei etwa 105 mmHg Sauerstoffpartialdruck, wobei für kleine Konzentrationen hohe Messempfindlichkeiten bei grossen K-Werten, für grosse Konzentrationen hohe Messempfindlichkeiten bei kleinen K-Werten gefunden werden.

Es sollte danach im Konzentrationsbereich oberhalb des Schnittpunkte S mit grösseren K-Werten, im Konzentrationsbereich unterhalb des Schnittpunktes S mit kleineren K-Werten gearbeitet werden.

Die Optimierung der Messanordnung durch Einstellung des K-Wertes hat sich die Erfindung deshalb zur Aufgabe gemacht.

Sie löst diese Aufgabe dadurch, dass die Membran aus einer Mischung von mindestens zwei Polymeren besteht und dass die Quenchkonstante der Membran durch das Mischungsverhältnis der beiden Polymere derart eingestellt ist, daß das Meßsignal im gesamten Meßbereich maximal ist.

Der Vorteil dieser Anordnung liegt darin, dass nunmehr die Optode durch Wahl des Mischungsverhältnisses so engestellt werden kann, dass entweder bei kleinen Sauerstoffkonzentrationen mit hoher Empfindlichkeit gemessen werden oder dass bei grossen Sauerstoffkonzentrationen über den gesamten Bereich mit etwa gleicher Messempfindlichkeit gemessen werden kann.

Auch andere Einstellungen sind möglich.

In Weiterbildung der Erfindung weist der Indikatorraum einen räumlich Veränderlichen K-Wert auf.

Eine solche Anordnung hat den Vorteil, dass der Membranbereich mit dem jeweils passender. K-Wert in Wirkverbindung mit dem Messobjekt gebracht und durch die Lichtmesseinrichtung vermessen werden kann.

Besonders gute Ergebnisse lassen sich erzielen, wenn die Polymermischung aus Silicon-Polymer und PVC-Polymer besteht.

Insbesondere lässt sich die Messempfindlichkeit über diejenige mit reinen Polymermembranen steigern, wenn das Mischungsverhältnis im Bereich zwischen 5 - 30 Gewichtsprozent PVC-Polymer in 95 - 70 Gewichtsprozent Silicon-Polymer besteht.

Eine Verringerung des K-Wertes tritt ein, wenn Mischungen aus Silicon-Polymer und Polystyrol vorgenommen werden.

Es ist somit möglich, den K-Wert über weite Bereiche durch entsprechende Stoffwahl bei der Mischung der Komponenten zu ändern.

Zur weiteren Erläuterung der Erfindung zeigen in der Zeichnung die

Fig. 1   die Empfindlichkeit von Fluorszenzoptoden bei-Verwendung unterschiedlicher Matrices,
Fig. 2   den Empfindlichkeitsbereich bei Änderungen des PVC-Anteils der Polymermischung.
Fig. 3   ein Fluorometer mit einer Optode mit räumlich variablem Mischungsverhältnis und entsprechendem räumlich variablen K-Wert.

Für Fluoreszenzindikatoren gilt die STERN-VOLLMER-Gleichung

$$(1) \qquad I(p) = \frac{Io}{1 + Kp(O_2)}$$

Io = Intensität ohne Einwirkung des Parameters
I(p) = Intensität nach Einwirkung des Parameters
K = Gesamtquenchkonstante

Die Gesamtquenchkonstante K ist dabei ein Mass für die Parameterempfindlichkeit der Optode. Die Bezeichnung "Quench"konstante ergibt sich, weil die Teilchen - je nach Indikator Sauerstoffmoleküle oder andere zu messende Teilchenarten - die Fluoreszenz der Indikatormoleküle verringern, indem sie die angeregten Zustände der Indikatormoleküle löschen.

Aus Gl. (1) ergibt sich die Messempfindlichkeit dann zu

$$(2) \qquad S(pO_2) = dI/d(pO_2) = KIo/(1 + k(pO_2))^2$$

Nach VAUGHAN und WEBER bestimmt sich die Quenchkonstante aus der mitt leren Lebensdauer des angeregten Zustandes des Indikatormoleküls $\tau$, der Kollisionsquenchkonstante $K^*$ und dem Löslichkeitskoeffizienten S zu

$$(3) \qquad K = K^* \cdot \tau_0 \cdot S$$

$K^*$ beschreibt dabei die Anzahl der Kollisionen zwischen Indikatormolekülen und Sauerstoffmolekülen und bestimmt sich aus

$$(4) \qquad K^* = \gamma (4\alpha \cdot D \cdot N)$$

$\gamma$ = Effektivität der Kollsionen
$\alpha$ = Summe der Radien der Stossmoleküle
D = Summe der Diffusionskoeffizienten
N = Molekülzahl / mmol

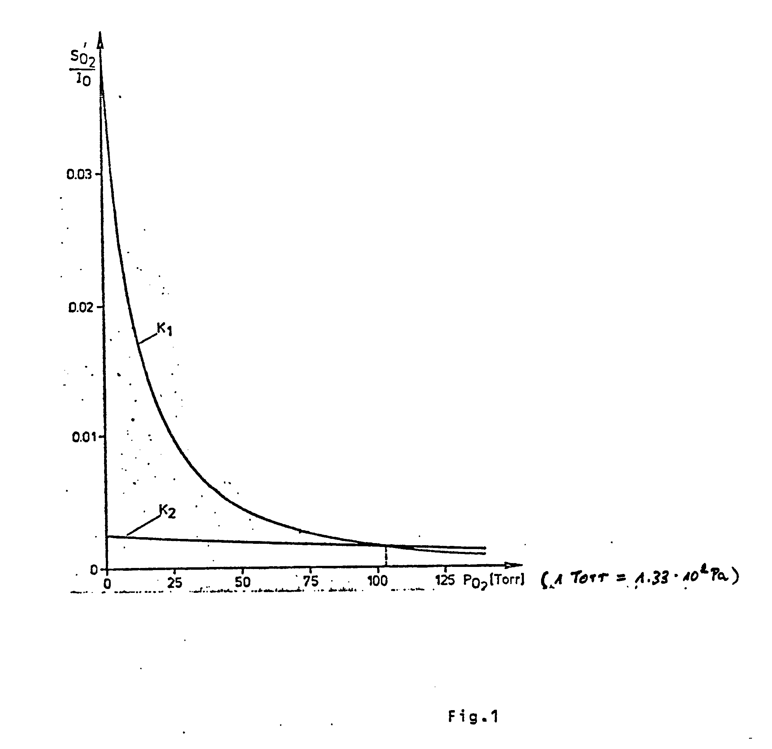

Die Messempfindlichkeit lässt sich danach über die Wahl der verschiedenen Parameter verändern. Sie wird zunächst möglich gross gewählt, sollte dann aber auf den jeweils gewählten Messbereich abgestimmt werden. Wie nämlich Fig. 1 zeigt, ist für grosse Konstanten K1 (K1 = 2.85 · 10⁻⁴/Pa = 3.8 x 10exp-2/Torr) die Messempfindlichkeit im unteren Konzentrationsbereich 13 K Pa (100 mmHg pO2) gross, für kleine Konstanten K2 (K2 = 1.8 · 10⁻⁵/Pa = 2.4 x 10exp-3/Torr). ist sie im oberen Konzentrationsbereich (> 13 K Pa (100 mmHg pO2) gross.

Eine von den Stoffparametern unabhängige Beeinflussung der Konstanten K lässt sich durch die Wahl der Kunststoffmatrices erreichen, in denen die Indikatormoleküle eingebettet sind.

Dabei hat sich gezeigt, dass sich der K-Wert und damit die die Messempfindlichkeit für einen vorgegeben Bereich je nach Wahl der Matrix vergrössern oder verkleinern lässt.

Eine freie Einstellbarkeit der K-Werte wird nämlich dadurch erreicht, dass anstelle von Einstoffmembranen solche aus Polymermischungen für die den Indikatorraum darstellende Membran verwendet werden.

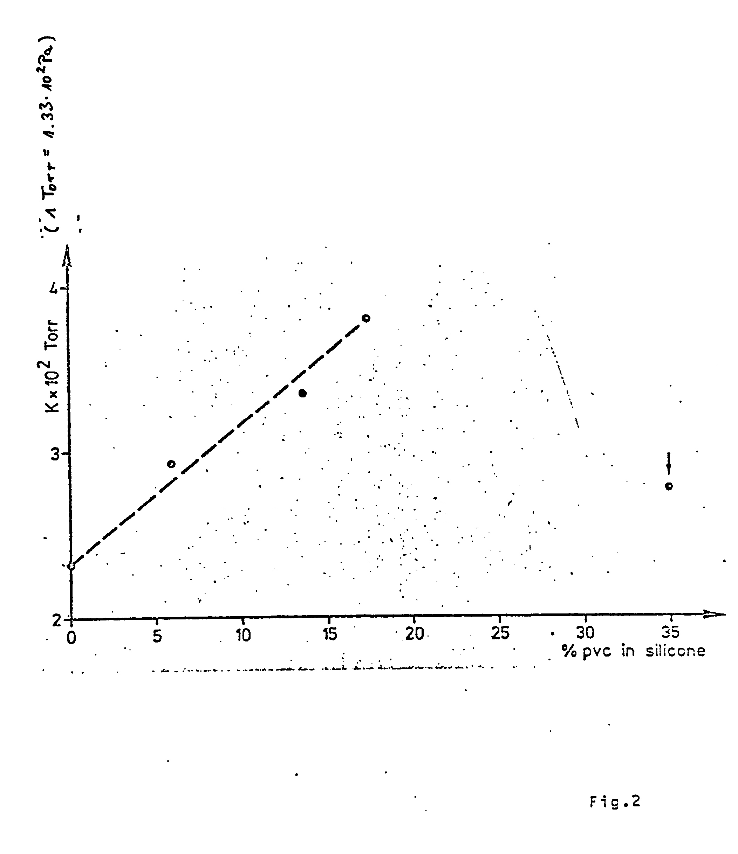

Wie aus Fig. 2 hervorgeht, lässt sich bei Polymermischungen aus polymeren Siliconkautschuk und polymerem PVC in einem Verhältnis von 5-30 Gewichtsprozenten PVC-Polymer in 95-70 Gewichtsprozenten Silicon-Polymer eine Variation der K-Wert eines Fluoreszenzindikators um etwa einen Faktor 2 erreichen.

Da eine Verkleinerung des K-Wertes, beispielsweise durch Mischung von Silicon-Polymer und Polystyrol, ohne weiters erreichbar ist, ist es möglich den Arbeitspunkt der Optode durch einfache Wahl von Stoffmischungen und des Mischungsverhältnisses zu verändern und auf den jeweiligen Messbereich anpassen.

Der Zahlenwert für die anzustrebenden Gesamtquenchkonstante K beim Messwert P ergibt sich aus theoretischen Erwägungen zu

$$(5) \qquad K = 2/P = \sqrt{27}/(SNR_0 \cdot \Delta P)$$

K = Gesamtquenchkonstante
$SNr_o$ = Signal/Rauschverhaltnis des Fluorometers bei Endausschlag
$\Delta$ = zugelassene Signalschwankung

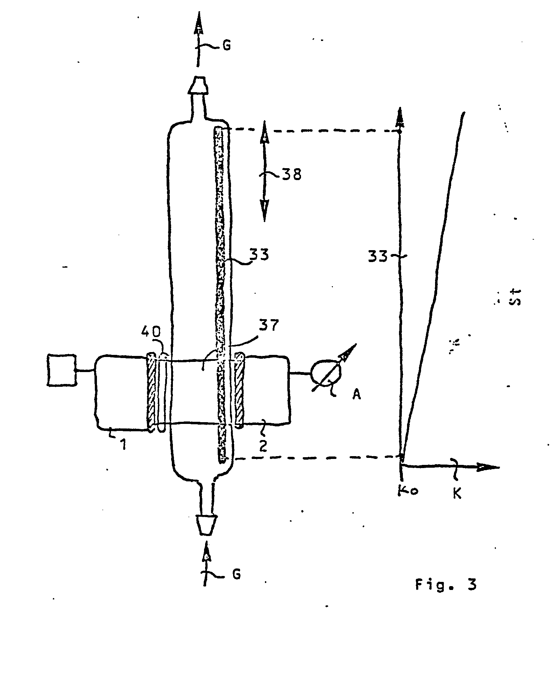

Insbesondere kann nach Fig. 3 auch ein Gradient des Mischungsverhältnisses über eine Optodenfläche 33 erzeugt werden. Dann kann beispielsweise durch Verschiebung der Optode 33 in Richtung 38 in einem aus einem monochromasierten Strahler 1 und einem monochromasierten Empfänger 2 mit Anzeige A und einer Messkammer für ein Messobjekt G bestehenden Fluorometer derjenige K-Wert der Optode 33 eingestellt werden, der möglichst kleine Rauschamplituden am Arbeitspunkt aufweist.

Die Optode 33 wird dazu solange im Strahlengang 37 in Richtung 38 verschoben, bis die Schwankungen an der Anzeige A ein Minimum erreichen. Das ist insbesondere bei Digitalanzeigen A leicht dadurch feststellbar, dass eine Verschiebung der jewe ils schwankenden Anzeigedekade nach rechts nicht mehr möglich ist.

Anstelle der Optode kann auch der Messfleck auf einer festliegenden Optode verschoben werden.

Die erfindungsgemässen Membranen können mit weiteren Indikatoren versehen sein, deren Indikatorwellenlänge verschieden untereinander sind. Dadurch ist nach Separation der den einzelnen Indikatoren zugeordneten Signalen eine Messung von unterschiedlichen Teilchenfraktionen oder von verschiedenen chemischen oder physikalischen Parametern ermöglicht. Einer der weiteren Indikatoren kann auch als Referenzindikator ausgebildet sein. Mit Hilfe des Referenzindikators, dessen Signal nicht von den zu messenden Teilchen oder Parameteren abhängt und das zur Quotientenbildung mit parameterabhängigen Signalen herangezogen wird, kann ein von optischen oder elektrischen Änderungen der Apparatur unabhängiges Anzeigesignal gewonnen werden.

Die erfindungsgemässen Membranen können weiterhin, beispielsweise durch Pigmenteinlagerungen, optisch vom Messobjekt entkoppelt sein, sodass Störungen der Messtrahlung durch das Messobjekt minimiert sind.

Bei der Herstellung der Membranen können sowohl für die zu mischenden Polymere als auch für die zuzufügenden Indikatoren die bekannten Solubilisierungen für die Ausgangsstoffe verwendet werden.

## Patentansprüche

1. Festmembran zur Begrenzung eines Indikatorraums, der mindestens einen optisch vermessbaren, durch die Konzentration einer Substanz oder durch einen physikalischen oder chemischen Parameter in seinen Fluoreszenzeigenschaften veränderbaren Fluoreszenzindikator aufweist, dadurch gekennzeichnet, das die Membran aus einer Mischung von midestens zwei Polymeren besteht und dass die Quenchkonstante der Membran durch das Mischungsverhältnis der beiden Polymere derart eingestellt ist, daß die Meßempfindlichkeit über den gesamten Meßbereich möglichst hoch ist.

2. Anordnung nach Anspruch 1, dadurch gekennzeichnet, dass die Mischung aus Silicon-Polymer und aus PVC-Polymer besteht.

3. Anordnung nach Anspruch 1, dadurch gekennzeichnet, dass die Mischung aus Silicon-Polymer und aus Polystyrol besteht

4. Anordnung nach Anspruch 2, dadurch gekennzeichnet, dass die Polymermischung aus einem Anteil von 5 - 50 Gewichtsprozent PVC-Polymer in 95 - 70 Gewichtsprozent Silicon-Polymer besteht.

5. Anordnung nach einem oder mehreren der Ansprüche 1 bis 4, dadurch gekennzeichnet, dass die Membran einen räumlich veränderlichen K-Wert aufweist.

6. Anordnung nach Anspruch 6, dadurch gekennzeichnet, dass die Membran im Strahlengang eines Fluorometers und im Messraum verschieblich angeordnet ist.

7. Anordnung nach einem der Ansprüche 1 bis 6, dadurch gekennzeichnet, dass die Quenchkonstante K einer im Strahlengang eines Fluorometers angeordneten Membran, die gemäss der Beziehung

$$(5) \qquad K = \frac{2}{P} = \sqrt{27}/(SNR_o \cdot \Delta P)$$

K = Gesamtquenchkonstante
$SNR_o$ = Signal/Rauschverhältnis des Fluorometers bei Endausschlag
$\Delta P$ = zugelassene Messwertschwankung
berechnet ist, eingestellt wird.

8. Anordnung nach Anspruch 5, dadurch gekennzeichnet, dass der Messfleck der Anordnung auf einer festliegenden Optode veränderbar ist.

9. Anordnung nach Anspruch 11, dadurch gekennzeichnet, dass ein Referenzindikator vorgesehen ist

10. Anordnung nach Anspruch 1, dadurch gekennzeichnet, dass Pigmente zur optischen Entkopplung gegen das Messobjekt vorgesehen sind.

11. Methode zur Herstellung der Membran nach Anspruch 1, dadurch gekennzeichnet, dass die zu mischenden Polymere sowie die zuzufügenden Indikatoren an sich bekannten Solubilisierungsverfahren unterworfen werden.

## Claims

1. A fixed membrane for limiting an indicator chamber having at least one optically measurable fluorescence indicator having fluorescence properties which can be changed by the concentration of a substance or by a physical or chemical parameter, characterised in that the membrane consists of a mixture of at least two polymers and that the quenching constant of the membrane is adjusted by the mixture ratio of the two polymers such that the measuring sensitivity over the entire measuring area is as high as possible.

2. An arrangement according to claim 1, characterized in that the mixture consists of a silicon polymer and a PVC polymer.

3. An arrangement according to claim 1, characterized in that the mixture consists of a silicon polymer and polystyrene.

4. An arrangement according to claim 2, characterized in that the polymer mixture consists of 5 - 30 per cent by weight PVC polymer in 96 - 70 per cent by weight silicon polymer.

5. An arrangement according to one or more of claims 1 to 4, characterized in that the membrane has a spatially variable K-value.

6. An arrangement according to claim 5, characterised in that the membrane is movably arranged in the emission path of a fluorometer and in the measuring chamber.

7. An arrangement according to any one of claims 1 to 6, characterized in that the quenching constant K of a membrane arranged in the emission path of a fluorometer is regulated, being calculated according to the expression;

$$(5) \qquad K = \tfrac{2}{p} = \sqrt{27}/(SNR_o \cdot \Delta p)$$

K = Total quenching constant
$SNR_o$ = Signal/noise ratio of the fluorometer at full deflection
$\Delta P$ = allowance for measuring value deviation.

8. An arrangement according to claim 5, characterized in that the measuring spot of the arrangement is adjustable on a fixed optode.

9. An arrangement according to claim 11, characterised in that a reference indicator is provided.

10. An arrangement according to claim 1, characterised in that pigments are provided for optical decoupling with respect to the object being measured.

11. Methods for the production of the membrane according to claim 1, characterised in that the polymers to be mixed as well as the indicators to be added are subjected to known solubilizing processes.

## Revendications

1. Membrane solide pour délimiter une chambre à indicateur, qui présente au moins un indicateur de fluorescence, dosable optiquement et dont les propriétés de fluoroscence peuvent être modifiées par la concentration d'une substance ou par un paramètre physique ou chimique, caractérisé en ce que la membrane est constituée d'un mélange d'au moins deux polymères et en ce que, grâce aux proportions de mélange des deux polymères, la constante d'amortissement de la membrane est ajustée de telle façon que la sensibilité de mesure soit la plus élevée possible sur tout le domaine de mesure.

2. Dispositif conforme à la revendication 1, caractérisé en ce que le mélange est constitué de polymère silicone et de polymère PVC.

3. Dispositif comforme à la revendication 1, caractérisé en ce que le mélange est constitué de polymère silicone et de polystyrène.

4. Dispositif conforme à la revendication 2, caractérisé en ce que le mélange de polymère est constitué d'une partie de 5 à 30 % en poids de polymère PVC dans 95 à 70 % en poids de polymère silicone.

5. Dispositif conforme à une ou plusieurs des revendications 1 à 4, caractérisé en ce que la membrane présente une valeur de K spatialement variable.

6. Dispositif conforme à la revendication 5, caractérisé en ce que la membrane est disposée de façon mobile sur le parcours des rayons d'un fluoromètre et dans la chambre de mesure.

7. Dispositif conforme à l'une des revendications 1 à 6, caractérisé en ce que l'on ajuste la constante d'amortissement K d'une membrane disposée sur le parcours des rayons d'un fluoromètre, qui est calculée d'après la relation
$$K = 2/P = \sqrt{27}/(SNR_o \cdot \Delta P)$$
dans laquelle:
K: constante d'amortissement global
$SNR_o$: rapport signal/bruit du fluoromètre pour l'amplitude finale
$\Delta P$: variation admise de la valeur mesurée.

8. Dispositif conforme à la revendication 5, caractérisé en ce que la tache de mesure du dispositif sur une

5

optode fixe est variable.

9. Dispositif conforme à la revendication 1, _caractérisé_ en ce qu'un indicateur de référence est prévu.

10. Dispositif conforme à la revendication 1, _caractérisé_ en ce que des pigments pour le découplage optique vis-à-vis de l'objet de mesure sont prévus.

11. Procéde de fabrication de la membrane conforme à la revendication 1, _caractérisé_ en ce que les polymères à mélanger, ainsi que les indicateurs à ajouter, sont soumis à un procédé de solubilisation connu en soi.

Fig.1

Fig.2

Fig. 3